# FASCICULE DE BREVET EUROPEEN

(11) **EP 3 756 769 B1**
(45) Date de publication et mention de la délivrance du brevet: **11.10.2023**
(21) Numéro de dépôt: 20181323.5
(22) Date de dépôt: 22.06.2020
(51) Int. Cl.: B05B 11/10

(54) **SYSTÈME DE FIXATION D'UN ORGANE DE DISTRIBUTION SUR UN COL FILETÉ D'UN RÉSERVOIR**
BEFESTIGUNGSSYSTEM EINES VERTEILUNGSORGANS AUF DEM GEWINDEHALS EINES BEHÄLTERS
SYSTEM FOR ATTACHING A DISPENSING MEMBER TO A THREADED NECK OF A TANK

(30) Priorité: 24.06.2019 FR 1906778
(43) Date de publication de la demande: 30.12.2020
(73) Titulaire: Albéa le Tréport, 76470 Le Tréport (FR)
(72) Inventeur: PRUVOST, Thomas, 80880 SAINT QUENTIN LA MOTTE (FR)
(74) Mandataire: Gevers & Orès

(56) Documents cités:
- EP-A1- 2 135 682
- JP-A- H09 276 758
- US-A1- 2009 001 103
- US-A1- 2009 283 549

## Description

### Domaine technique de l'invention

L'invention concerne un système de fixation pour fixer un organe de distribution, tel qu'une pompe ou une valve, sur un col de réservoir pour constituer un distributeur de produit fluide. L'organe de distribution est actionnable manuellement par l'utilisateur à l'aide d'un ou de plusieurs doigt(s), de manière à distribuer du produit fluide sous forme dosée ou non. De tels distributeurs de produits fluides sont fréquemment utilisés dans les domaines de la parfumerie, de la cosmétique ou encore de la pharmacie.

### Arrière-plan technique

Dans l'art antérieur, il existe déjà des systèmes de fixation comprenant une bague de fixation associée à une frette rigide engagée autour de la bague de fixation. La bague comprend en général une jupe destinée à être engagée autour du col du réservoir, cette jupe comprenant des pattes de fixation flexibles destinée à venir en prise fixant avec un profil approprié formé par le col. En général, le col présente un rebord annulaire supérieur sous lequel les pattes viennent s'encliqueter. Il est fréquent d'utiliser la frette rigide pour pousser les pattes de fixation contre le profil approprié du col. Un tel système de fixation est décrit par le document EP2135682.

Lorsque le col présente un filetage externe, sans rebord d'encliquetage, il est alors connu d'utiliser une bague rigide dont la jupe présente un filetage interne. La bague peut alors être vissée sur le col du réservoir, et dévissée. L'inconvénient de ce type de bague est la complexité de sa fabrication. En effet, après le moulage d'une telle bague, le démoulage présente deux caractéristiques :
- une rotation du moule pour dévisser la bague, ce qui est compliqué à mettre en place d'un point de vue cinématique ;
- l'observation d'un temps d'attente avant ce démoulage par rotation afin que la bague se refroidisse et que le filetage durcisse, sous peine d'un endommagement du filetage lors du démoulage.

Ces deux caractéristiques conduisent à une augmentation du temps de cycle d'injection et donc du coût de la bague.

Il est également connu d'utiliser une bague dont la surface interne est lisse et conçue dans un matériau plus mou qui puisse être déformé plastiquement contre le filetage du col du réservoir lors du montage de la bague sur le col par une action de vissage. Dans ce cas, le filetage externe « mord » dans la bague et cette dernière présente des sillons après montage. La bague initialement lisse peut être facilement démoulée. Cependant, la tenue de la bague sur le col du réservoir après montage n'est pas aussi efficace que si la bague avait eu un vrai filetage interne prévu à cet effet initialement. De plus, cette déformation plastique avec les sillons n'est pas faite pour tenir à plusieurs vissages et dévissages de la bague sur le col.

### Résumé de l'invention

Dans le cadre de la présente invention, le distributeur de produit fluide est démontable : le système de fixation peut être retiré du col par dévissage. Ainsi, l'utilisateur peut directement accéder au contenu du réservoir, par exemple pour recueillir le reste de produit fluide, notamment lorsqu'il s'agit d'une crème. La capacité de démontage du distributeur peut également être mise à profit dans un but de recyclage.

La présente invention a pour objectif de pallier les différents inconvénients énoncés précédemment, au moyen d'un système de fixation vissable sur un col présentant un filetage externe, comprenant une bague présentant un vrai filetage interne pour assurer un montage et un démontage fiable et efficace de la bague par rapport au col, et qui puisse être facilement moulée et démoulée, avec un temps de cycle minimum.

Ce but est atteint grâce à un système de fixation pour fixer un organe de distribution, tel qu'une pompe, sur un col d'un réservoir pour constituer un distributeur de produit fluide, le distributeur étant démontable par retrait du système de fixation à partir du col, le système comprenant de façon classique une bague de fixation et une frette rigide, la bague comprenant une jupe
destinée à être engagée autour du col, cette jupe comprenant des pattes de fixation articulées inclinées vers l'extérieur par rapport à un axe central X de la bague, la frette étant déplaçable par rapport à la jupe et engagée autour de la jupe de manière à rabattre les pattes articulées jusqu'à leur alignement radial avec l'axe X.

Ce système de fixation se caractérise à titre principal en ce que la bague avec la frette sont :
- montables sur le col sans mouvement relatif entre la bague et la frette ;
- et démontables du col sans mouvement relatif entre la bague et la frette,
   et en ce que les pattes articulées présentent un moyen de fixation interne apte à interférer avec un moyen de fixation externe du col, ledit moyen de fixation interne étant un filetage moulé.

L'idée principale de cette invention consiste à prévoir des pattes articulées au niveau de la jupe, avec un filetage interne, de manière à pouvoir les soulever et les rabattre à souhait, c'est-à-dire changer leur orientation en fonction des situations. Pour la situation du démoulage de la bague, il suffit de soulever les pattes vers l'extérieur pour les mettre à distance du moule et ainsi démouler immédiatement la bague par un unique mouvement de translation du moule. Pour la situation du vissage sur le col d'un réservoir, il suffit de rabattre les pattes vers l'intérieur pour qu'elles forment une jupe filetée par plage angulaire, ce qui ne pose pas de problème particulier en termes de fiabilité du vissage.

Par alignement radial, on entend un alignement des pattes par rapport à l'axe X, ce qui signifie que l'intégralité de la patte est à égale distance de l'axe X. La distance entre une première extrémité de la patte articulée (au niveau de l'articulation) et l'axe X est égale à la distance entre une seconde extrémité de la patte articulée (libre, opposée à la première extrémité) et l'axe X. Les pattes se déploient donc parallèlement à l'axe X.

Selon les différents modes de réalisation de l'invention, qui pourront être pris ensemble ou séparément :
- la bague comporte une partie supérieure surmontant la jupe, chaque patte articulée étant reliée à cette partie supérieure via une charnière.
- la jupe comporte des moyens de blocage radial des pattes articulées limitant le rabattement des pattes articulées vers l'intérieur de la jupe.
- lesdits moyens de blocage radial des pattes articulées consistent en des pattes fixes reliées rigidement à la partie supérieure.
- la jupe comporte plusieurs secteurs angulaires composés d'une alternance entre lesdites pattes articulées et lesdites pattes fixes.
- les pattes fixes présentent des bords latéraux contre lesquels des bords latéraux des pattes articulées entrent en contact par frottement.
- les pattes articulées présentent un élargissement à hauteur duquel les bords latéraux des pattes articulées viennent se frotter contre les bords latéraux des pattes fixes.
- l'élargissement se situe de préférence au niveau de l'extrémité libre des pattes articulées.
- les pattes fixes présentent des nervures axiales se développant le long de leurs bords latéraux.
- les pattes articulées sont rabattues en force entre les nervures axiales des pattes fixes.
- les charnières des pattes articulées consistent en des charnières film.
- la bague est formée en une seule pièce.
- les moyens de fixation interne des pattes articulées consistent en un filetage interne et les moyens de fixation externe du col consistent en un filetage externe, les pattes articulées étant aptes à être vissées sur le col.

L'invention se rapporte également à un distributeur de produit fluide comprenant un réservoir de produit fluide comprenant un col fileté, un organe de distribution, tel qu'une pompe, et un système de fixation tel que décrit ci-dessus, dans lequel le système de fixation est vissé au col fileté.

Et enfin, l'invention concerne un procédé de fabrication d'une bague d'un système de fixation pour fixer un organe de distribution, tel qu'une pompe, sur un col d'un réservoir pour constituer un distributeur de produit fluide, la bague présentant un axe central X et comprenant une jupe destinée à être engagée autour du col, cette jupe comprenant des pattes de fixation articulées présentant un moyen de fixation interne apte à interférer avec un moyen de fixation externe du col, ledit procédé comprenant les étapes suivantes :
- moulage de la bague sur un noyau avec les pattes articulées en position inclinées par rapport à l'axe central et dirigées vers l'extérieur de la jupe ;
- relevage des pattes articulées jusqu'à leur dégagement par rapport au noyau ;
- démoulage de la bague avec un unique mouvement de translation rectiligne.

Le relevage et le démoulage est réalisé au moyen d'une dévétisseuse.

En l'absence d'un tel outil, le démoulage est réalisé en force. Dans ce cas, la bague est démoulée avec ses pattes en même temps, sans avoir à les relever auparavant. Les étapes du procédé de fabrication sont donc les suivantes :
- moulage de la bague sur un noyau avec les pattes articulées en position inclinées par rapport à l'axe central et dirigées vers l'extérieur de la jupe ;
- démoulage de la bague avec ses pattes articulées en un unique mouvement de translation rectiligne.

### Brève description des figures

D'autres caractéristiques et avantages de l'invention apparaitront au cours de la lecture de la description détaillée qui va suivre pour la compréhension de laquelle on se reportera aux dessins annexés dans lesquels
[Fig.1] la figure 1 est une vue en perspective d'une bague de fixation selon l'invention;
[Fig.2] la figure 2 est une vue de dessous en perspective de la bague ;
[Fig.3] la figure 3 est une vue de dessus en perspective de la bague ;
[Fig.4] la figure 4 est une vue de dessous de la bague ;
[Fig.5] la figure 5 illustre le moulage de la bague sur un noyau ;
[Fig.6] la figure 6 est une vue en coupe d'un système de fixation composée d'une frette et d'une bague, la frette étant pré-montée sur la bague ;
[Fig.7] la figure 7 est une vue en coupe d'un système de fixation composée d'une frette et d'une bague, la frette étant montée sur la bague ;
[Fig.8] la figure 8 est une vue en perspective d'un système de fixation ou la frette est montée sur la bague ;
[Fig.9] la figure 9 est une vue en perspective et en coupe transversale de la partie inférieure de la bague lorsqu'elle est prête à être montée sur le col d'un réservoir ;
[Fig.10a] la figure 10a est une vue en coupe d'une bague après avoir été démoulée, dans laquelle est inséré un joint ;
[Fig.10b] la figure 10b est une vue en coupe de la bague selon la figure 10a dans laquelle est monté un corps de pompe ;
[Fig.10c] la figure 10c est une vue en coupe de la bague et du corps de pompe selon la figure 10b, une frette étant montée sur la bague ;
[Fig.10d] la figure 10d est une vue en coupe de la bague, du corps de pompe et de la frette selon la figure 10c, un tube d'aspiration étant monté sur le corps de pompe ;
[Fig.10e] la figure 10e est une vue en coupe de la bague, du corps de pompe, de la frette, et du tube d'aspiration selon la figure 10d, un bouton-poussoir étant monté sur le corps de pompe.

### Description détaillée de l'invention

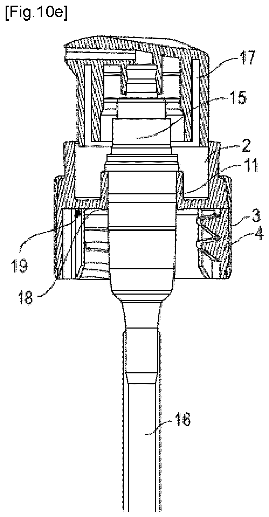

On se référera tout d'abord à la figure 10e pour décrire en détail un mode de réalisation non limitatif d'un système de fixation 1 de l'invention. Ce système de fixation 1 comprend une bague 2 de fixation associée à une frette 3 rigide qui est destinée à venir s'engager avec serrage radial autour de la bague 2 de fixation, comme on le verra ci-après. La bague 2 de fixation peut être réalisée par injection moulage de matières plastiques appropriées. Quant à la frette 3 rigide, elle peut également être réalisée en matière plastique, mais de préférence elle est réalisée en métal, de manière à conférer un attrait esthétique aux distributeurs. Le système de fixation 1 ainsi constitué par la bague 2 et la frette 3 sert à la fixation d'un organe de distribution 15 telle qu'une pompe ou une valve, sur un col de réservoir (non représenté) de manière à constituer un distributeur de produit fluide. Le système de fixation 1 a une double fonction, à savoir une fonction de fixation, mais également une fonction d'étanchéité. Ainsi, le produit fluide stocké dans le réservoir ne peut être extrait qu'à travers l'organe de distribution.

La bague 2 de fixation comprend des moyens de réception pour la réception de l'organe de distribution 15. Les moyens de réception peuvent par exemple se présenter sous la forme d'un logement annulaire 11 d'encliquetage dans lequel est reçu l'organe de distribution 15. Ce logement annulaire 11 définit une ouverture axiale permettant à l'organe de distribution 15 de traverser la bague 2.

L'organe de distribution 15 peut consister en un corps de pompe 15 engagé dans les moyens de réception. À son extrémité inférieure, le corps de pompe 15 forme une entrée de produit fluide pourvue d'un tube 16 plongeur. A son extrémité supérieure, le corps de pompe 15 forme une sortie de produit fluide pourvue d'un bouton poussoir 17 servant à actionner la pompe.

Extérieurement aux moyens de réception, la bague 2 forme un plateau annulaire 19 qui vient se positionner sur le bord annulaire du col du réservoir, avec une interposition éventuelle d'un joint 18 de col annulaire.

Enfin, la bague 2 de fixation forme extérieurement une jupe qui est réalisée de manière discontinue dans sa partie inférieure, formant ainsi des pattes de fixation.

Ces pattes de fixation s'étendent librement vers le bas et forment intérieurement un profil destiné à venir en prise avec un filetage externe du col du réservoir.

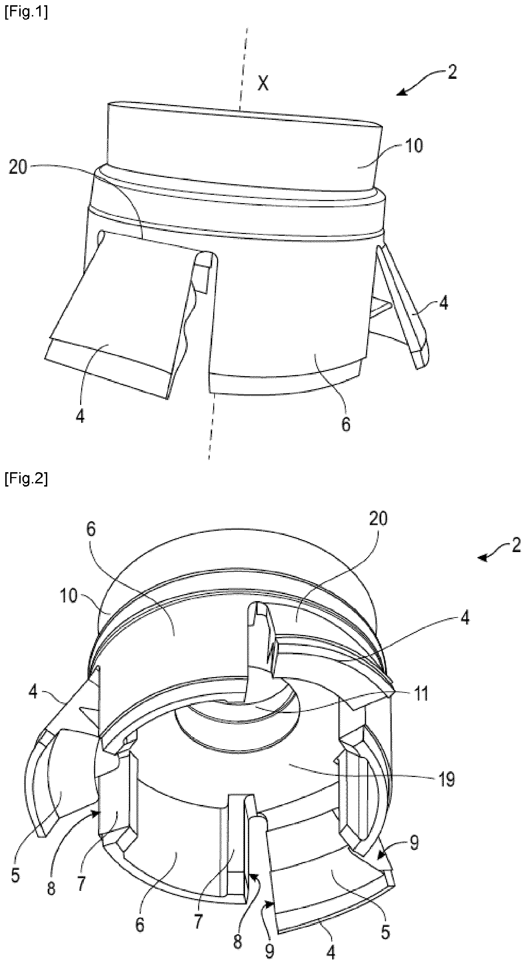

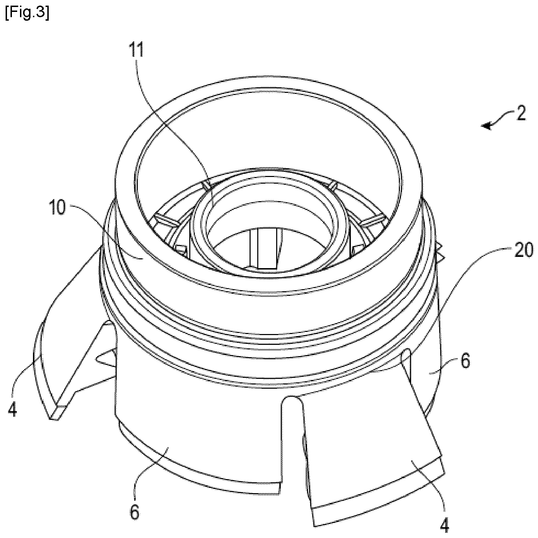

De façon plus précise, la bague 2 est représentée notamment sur les figures 1 à 4. La bague 2 présente un axe central X.

La jupe de la bague 2 comprend des secteurs angulaires avec deux structures de pattes alternées.

La première structure de pattes est flexible et articulée par une charnière 20 à la partie supérieure 10 de la bague 2, constituée d'une paroi périphérique cylindrique. Ces pattes sont appelées « pattes articulées 4 ». Elles comprennent un filetage interne 5.

La deuxième structure de pattes est liée rigidement à la partie supérieure 10 de la bague 2, et orientée selon l'axe de la bague 2, et ne comprend pas de filetage intérieur. Ces pattes sont appelées « pattes fixes 6 ».

Cette jupe est ainsi constituée d'une succession de pattes articulées 4 et filetées et de pattes fixes 6 et lisses. Il y a une alternance entre les deux types de pattes.

Sur l'exemple représenté sur les figures, il y a trois pattes articulées 4 en alternance avec trois pattes fixes 6. Cependant, tout autre nombre de pattes articulées 4 et de pattes fixes 6 est envisageable. Il y a autant de pattes articulées 4 que de pattes fixes 6.

Au final, la jupe présente un filetage interne 5 par plage angulaire. Ce type de filetage par plage angulaire est suffisant en termes de fiabilité de vissage pour que le système de fixation 1 soit vissé correctement sur le col du réservoir. Les pattes articulées 4 viennent ainsi en prise avec le filetage externe du col du réservoir.

De préférence, les charnières 20 reliant les pattes articulées 4 à la partie supérieure de la bague 2 sont du type charnière 20 film, de manière à ce que les pattes et la partie supérieure de la bague 2 soit issues de la même matière. La bague 2 consiste alors en une seule et unique pièce moulée.

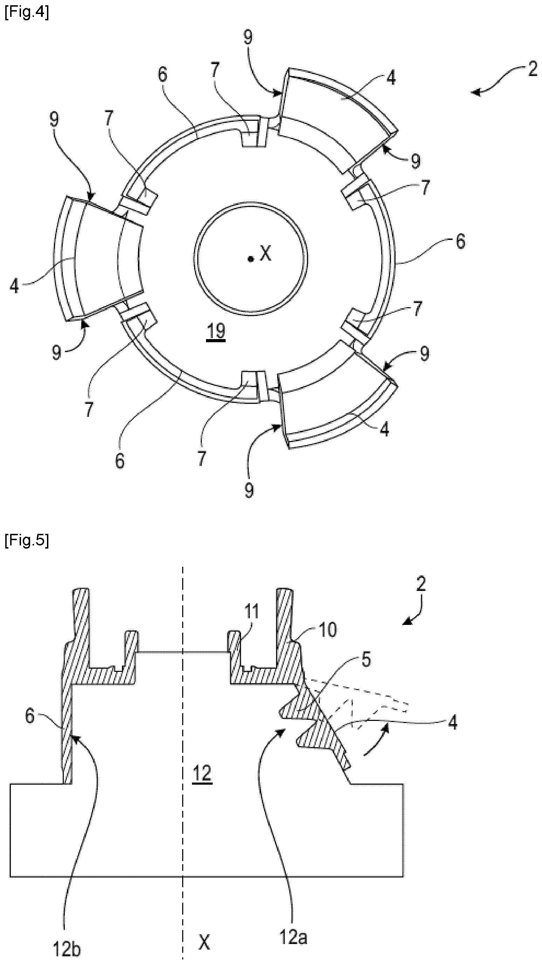

Le moulage de la bague 2 est plus précisément illustré en figure 5.

Le moule comporte un noyau 12. Ce noyau 12 présente un pourtour périphérique avec des parois inclinées 12a et des parois verticales 12b qui seront le reflet respectivement des pattes articulées 4 et des pattes fixes 6 de la bague 2. Les parois inclinées 12a présentent un filetage externe permettant ainsi d'obtenir le moulage du filetage interne 5 des pattes articulées 4. Une fois que la bague 2 est moulée sur ce noyau 12, il suffit de remonter les différentes pattes articulées 4 vers le haut, c'est-à-dire de les dégager par rapport au noyau 12 en les faisant pivoter autour de la charnière 20 film, de manière à ce qu'elles ne soient plus en prise avec le noyau 12. Ce relevage des pattes articulées 4 est réalisé par un retrait en force du moule, ou bien par une pièce nommée « dévétisseuse ». Ainsi, seules des surfaces lisses et rigides de la bague 2 restent en contact avec le noyau 12 et il est alors possible de retirer le noyau 12 par rapport à la bague 2 par un simple mouvement de translation rectiligne, pour obtenir le démoulage de la bague 2. Ainsi, les surfaces lisses et rigides glissent le long du noyau 12.

De préférence, la bague 2 est démoulée par déplacement axial du noyau, c'est-à-dire du moule.

Pour démouler la bague 2, il n'est donc plus nécessaire d'attendre que le filetage ait totalement durci. Le noyau 12 peut être séparé de la bague 2 peu après injection. Le temps de refroidissement est typiquement divisé par deux, ce qui diminue grandement le temps de cycle. De plus, le démoulage est facilité puisqu'il ne consiste qu'en en mouvement de translation rectiligne qui est d'un point de vue cinématique nettement plus facile à réaliser qu'un démoulage par rotation comme dans l'art antérieur pour dévisser le noyau 12 par rapport à la bague 2.

Il est à noter que les pattes articulées 4 peuvent être moulées à plat, donc perpendiculairement aux pattes fixes 6. Les parois 12a sont alors inclinées à 90° par rapport à l'axe X de la bague 2.

La bague 2 ainsi obtenue après moulage présente une pluralité de pattes fixes 6 orientées selon l'axe X de la bague 2, et une pluralité de pattes articulées 4 inclinées par rapport à l'axe X de la bague 2 et dirigées vers l'extérieur, comme cela est bien visible sur les figures 1 à 4.

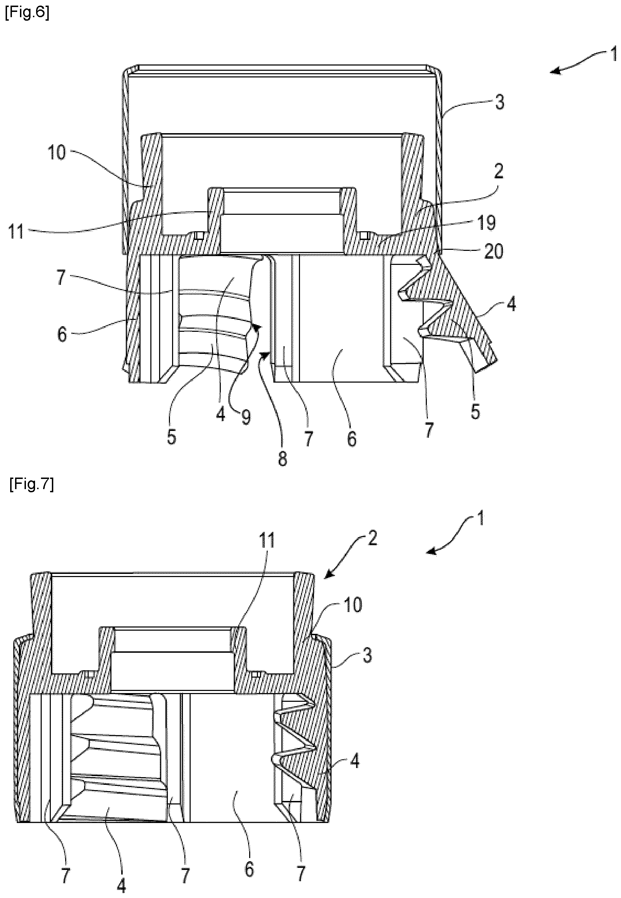

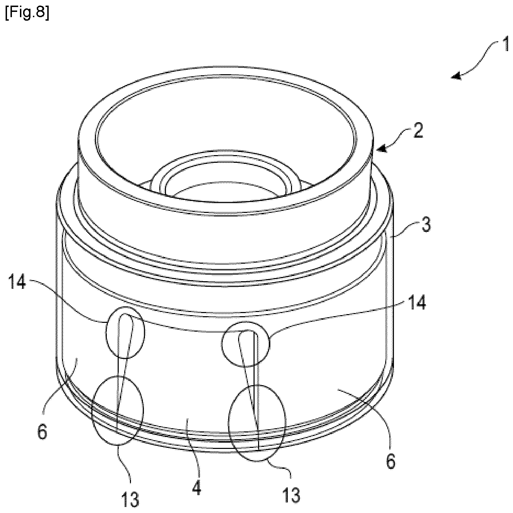

Lors de l'assemblage du système de fixation 1, la frette 3, consistant en une pièce cylindrique de révolution, vient tout d'abord se pré-positionner sur la bague 2 au niveau de sa partie supérieure 10, c'est-à-dire en amont de la jupe, comme cela est illustré en figure 6. Dans ce cas, les pattes articulées 4 sont encore inclinées vers l'extérieur. Lorsque la frette 3 est enfoncée en force autour de la bague 2, elle vient peu à peu rabattre les pattes articulées 4 vers l'intérieur de la bague 2 jusqu'à ce que les pattes articulées 4 soient alignées radialement avec les pattes fixes 6. Dans ce cas, les pattes fixes 6 et les pattes articulées 4 sont coaxiales par rapport à l'axe X et forment une jupe cylindrique d'axe X, comme cela est illustré aux figures 7 et 8. Le système de fixation 1 est alors prêt pour être vissé sur un col de réservoir présentant un filetage externe. Il peut également être dévissé, sans qu'il y ait de mouvement relatif entre la frette 3 et la bague 2.

Lors du rabattement des pattes articulées 4 par la frette 3, il est possible que le pivotement des pattes articulées 4 ne s'arrête pas exactement dans l'alignement radial des pattes fixes 6, et que les pattes articulées 4 aillent plus loin et se retrouvent inclinées vers l'intérieur de la bague 2, en fonction de la souplesse et de la flexibilité de la charnière 20 film.

Il est donc nécessaire que les pattes articulées 4 soient limitées dans leur déplacement radial vers l'intérieur, sinon l'ouverture entre les pattes articulées 4 filetées serait trop limitée et d'ailleurs indéfinie, et le système de fixation 1 ne pourrait donc pas être monté sur le col fileté d'un réservoir.

À cette fin, les pattes fixes 6 sont utilisées comme des moyens de blocage radial des pattes articulées 4 limitant le rabattement des pattes articulées 4 vers l'intérieur de la jupe. Plus précisément, c'est le dimensionnement entre les pattes fixes 6 et les pattes articulées 4 qui va permettre la limitation. Les pattes fixes 6 présentent des bords latéraux 8 contre lesquels les bords latéraux 9 des pattes articulées 4 entrent en contact par frottement. Aussi, lors du repliement des pattes articulées 4 par le montage de la frette 3 esthétique, les bords latéraux 9 des pattes articulées 4 sont montés en force entre les bords latéraux 8 des pattes fixes 6. Pour augmenter encore ce montage en force, les pattes articulées 4 présentent un élargissement, et le frottement entre les pattes articulées 4 et les pattes fixes 6 est réalisé notamment au niveau de cet élargissement. De préférence, l'élargissement se situe au niveau de l'extrémité libre des pattes articulées 4, donc en partie inférieure des pattes articulées 4.

De préférence encore, les pattes articulées 4 ont une forme évasée vers leur extrémité libre, et présentent donc une largeur maximale au niveau de leur extrémité libre. Dans ce cas, le frottement maximal entre les pattes articulées 4 et les pattes fixes 6 aura lieu au niveau des parties inférieures des bords latéraux 9,8 des pattes articulées 4 et des pattes fixes 6.

Un autre risque serait que la zone de frottement 13 ne présente pas une course suffisamment grande pour que les pattes articulées 4 puissent être stoppées à temps avant d'être trop rabattues vers l'intérieur de la bague 2. Pour répondre à ce problème, des nervures 7 axiales s'étendant radialement vers l'intérieur sont prévues le long des bords latéraux 8 des pattes fixes 6. Ces nervures 7 présentent une surface de frottement radiale plus importante qui permet donc d'augmenter la course de frottement entre les pattes articulées 4 et les pattes fixes 6 et qui assurent l'arrêt du pivotement des pattes articulées 4 de manière totalement fiable et efficace. En d'autres termes, ces nervures 7 augmentent l'épaisseur des pattes fixes 6 au niveau de leurs bords latéraux 8.

Elles permettent également de renforcer les bords latéraux 8 des pattes fixes 6.

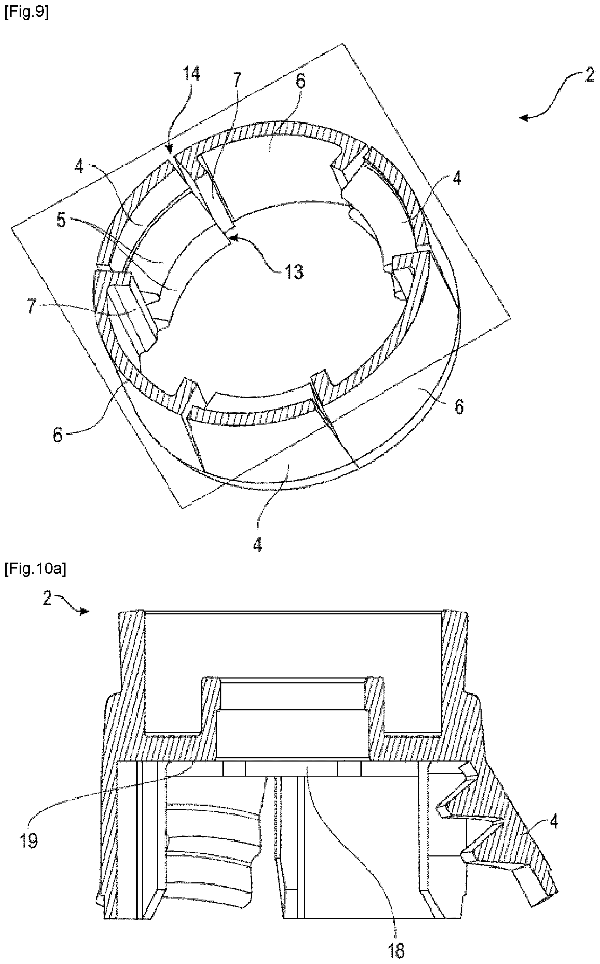

Ainsi, lors du repliement des pattes articulées 4 par montage de la frette 3 esthétique, la partie inférieure des bords latéraux 9 des pattes articulées 4 est montée en force contre les nervures 7 des pattes fixes 6 et leur position radiale est suffisamment bien définie pour que l'ensemble puisse ensuite être vissé automatiquement sur le col fileté d'un flacon. Sur les figures 8 et 9, il est bien visible que les pattes articulées 4 ont une forme évasée, et qu'il n'existe pas de frottement au niveau de la partie supérieure des bords latéraux 8,9, puisqu'il existe un espace libre 14 entre les pattes articulées 4 et les pattes fixes 6, et qu'il existe une zone de frottement 13 au niveau de la partie inférieure des bords latéraux 9,8 entre les pattes articulées 4 les pattes fixes 6.

Les nervures permettent par ailleurs de centrer la bague sur le col du réservoir (non représenté).

Les figures 10a à 10e représentent les différentes étapes de montage du système de fixation 1 avec un organe de distribution.

En figure 10a la bague 2 est démoulée et ses pattes articulées 4 sont en position inclinée vers l'extérieur. Un joint 18 est inséré à l'intérieur de la bague 2 et vient se plaquer contre le plateau annulaire 19.

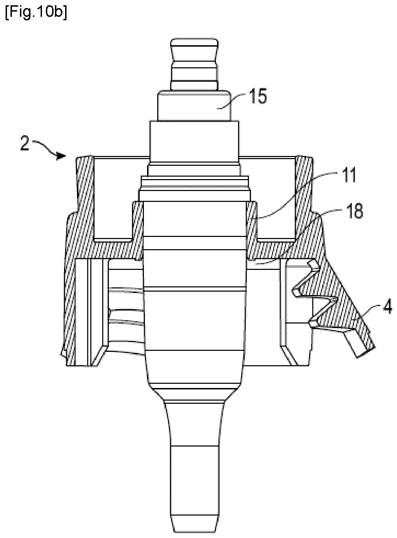

En figure 10b un corps de pompe 15 est inséré à l'intérieur du logement annulaire 11 de la bague 2.

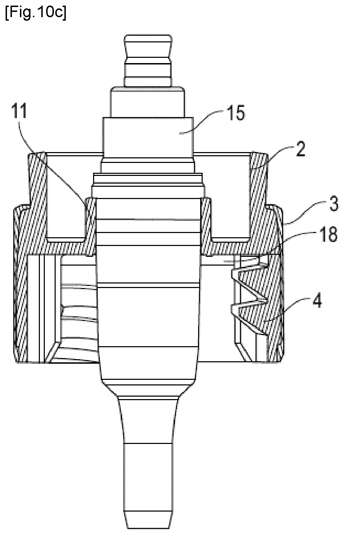

En figure 10c la frette 3 vient se positionner autour de la bague 2 et rabat les différentes pattes articulées 4 de façon à ce que la jupe de la bague 2 ait une allure cylindrique, et de façon à ce que les pattes articulées 4 et les pattes fixes 6 soient toutes alignées radialement.

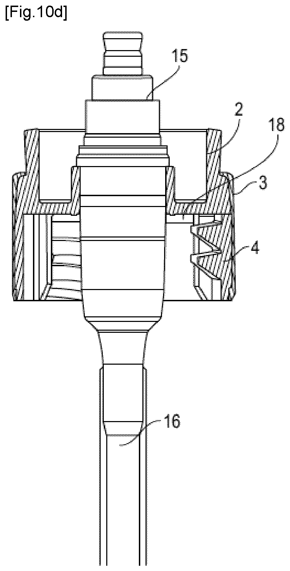

En figure 10d un tube 16 plongeur est inséré en entrée du corps de pompe 15.

En figure 10e un bouton poussoir 17 est inséré en sortie du corps de pompe 15.

Les configurations montrées aux figures citées ne sont que des exemples possibles, nullement limitatifs, de l'invention qui englobe au contraire les variantes de formes et de conceptions à la portée de l'homme de l'art. L'invention est définie par les revendications annexées.

## Revendications

1. Système de fixation (1) pour fixer un organe de distribution, tel qu'une pompe, sur un col d'un réservoir pour constituer un distributeur de produit fluide, le distributeur étant démontable par retrait du système de fixation (1) à partir du col, le système comprenant une bague (2) de fixation et une frette (3) rigide, la bague (2) comprenant une jupe destinée à être engagée autour du col, cette jupe comprenant des pattes de fixation articulées (4) inclinées vers l'extérieur par rapport à un axe central X de la bague (2), la frette (3) étant déplaçable par rapport à la jupe et engagée autour de la jupe de manière à rabattre les pattes articulées (4) jusqu'à leur alignement radial avec l'axe X, **caractérisé en ce que** la bague (2) avec la frette (3) sont :
- montables sur le col sans mouvement relatif entre la bague (2) et la frette (3) ;
- et démontables du col sans mouvement relatif entre la bague (2) et la frette (3),
et **en ce que** les pattes articulées (4) présentent un moyen de fixation interne (5) apte à interférer avec un moyen de fixation externe du col, ledit moyen de fixation interne (5) étant un filetage moulé.

2. Système de fixation (1) selon la revendication précédente, **caractérisé en ce que** la bague (2) comporte une partie supérieure (10) surmontant la jupe, chaque patte articulée (4) étant reliée à cette partie supérieure (10) via une charnière (20).

3. Système de fixation (1) selon la revendication précédente, **caractérisé en ce que** la jupe comporte des moyens de blocage radial des pattes articulées (4) limitant le rabattement des pattes articulées (4) vers l'intérieur de la jupe.

4. Système de fixation (1) selon la revendication précédente, **caractérisé en ce que** lesdits moyens de blocage radial des pattes articulées (4) consistent en des pattes fixes (6) reliées rigidement à la partie supérieure (10).

5. Système de fixation (1) selon la revendication précédente, **caractérisé en ce que** la jupe comporte plusieurs secteurs angulaires composés d'une alternance entre lesdites pattes articulées (4) et lesdites pattes fixes (6).

6. Système de fixation (1) selon la revendication précédente, **caractérisé en ce que** les pattes fixes (6) présentent des bords latéraux (8) contre lesquels des bords latéraux (9) des pattes articulées (4) entrent en contact par frottement.

7. Système de fixation 1 selon la revendication précédente, **caractérisé en ce que** les pattes articulées (4) présentent un élargissement à hauteur duquel les bords latéraux (9) des pattes articulées (4) viennent frotter contre les bords latéraux (8) des pattes fixes (6).

8. Système de fixation (1) selon la revendication précédente, **caractérisé en ce que** l'élargissement se situe de préférence au niveau de l'extrémité libre des pattes articulées (4).

9. Système de fixation (1) selon la revendication précédente, **caractérisé en ce que** les pattes fixes (6) présentent des nervures (7) axiales se développant le long de leurs bords latéraux (8).

10. Système de fixation (1) selon la revendication précédente, **caractérisé en ce que** les pattes articulées (4) sont rabattues en force entre les nervures (7) axiales des pattes fixes (6).

11. Système de fixation (1) selon l'une des revendications précédentes, **caractérisé en ce que** la bague (2) est formée en une seule pièce.

12. Distributeur de produit fluide comprenant un réservoir de produit fluide comprenant un col, un organe de distribution (15), tel qu'une pompe, et un système de fixation (1) selon l'une quelconque des revendications précédentes, dans lequel le système de fixation (1) est fixé au col.

13. Procédé de fabrication d'une bague (2) d'un système de fixation (1) pour fixer un organe de distribution (15), tel qu'une pompe, sur un col d'un réservoir pour constituer un distributeur de produit fluide, la bague (2) présentant un axe central X et comprenant une jupe destinée à être engagée autour du col, cette jupe comprenant des pattes de fixation articulées (4) présentant un moyen de fixation interne (5) apte à interférer avec un moyen de fixation externe du col, ledit procédé comprenant les étapes suivantes :
- moulage de la bague (2) sur un noyau avec les pattes articulées (4) en position inclinées par rapport à l'axe central et dirigées vers l'extérieur de la jupe ;
- relevage des pattes articulées (4) jusqu'à leur dégagement par rapport au noyau ;
- démoulage de la bague (2) avec un unique mouvement de translation rectiligne.

14. Procédé de fabrication d'une bague (2) d'un système de fixation (1) pour fixer un organe de distribution (15), tel qu'une pompe, sur un col d'un réservoir pour constituer un distributeur de produit fluide, la bague (2) présentant un axe central X et comprenant une jupe destinée à être engagée autour du col, cette jupe comprenant des pattes de fixation articulées (4) présentant un moyen de fixation interne (5) apte à interférer avec un moyen de fixation externe du col, ledit procédé comprenant les étapes suivantes :
- moulage de la bague (2) sur un noyau avec les pattes articulées (4) en position inclinées par rapport à l'axe central et dirigées vers l'extérieur de la jupe ;
- démoulage de la bague (2) avec ses pattes articulées (4) en un unique mouvement de translation rectiligne.

## Patentansprüche

1. Befestigungssystem (1) zum Befestigen eines Verteilungsorgans, wie einer Pumpe, auf einem Hals eines Behälters zum Bilden eines Verteilers eines flüssigen Produkts, wobei der Verteiler durch Abziehen des Befestigungssystems (1) vom Hals abnehmbar ist, wobei das System einen Ring (2) zum Befestigen und einen starren Bund (3) umfasst, wobei der Ring (2) eine Schürze umfasst, die dazu bestimmt ist, um den Hals herum eingesetzt zu werden, wobei diese Schürze gelenkige Befestigungslaschen (4) umfasst, die in Bezug auf eine Mittelachse X des Ringes (2) nach außen geneigt sind, wobei der Bund (3) in Bezug auf die Schürze verschiebbar ist, und um die Schürze herum derart eingesetzt ist, um die gelenkigen Laschen (4) bis zu deren radialer Ausrichtung mit der Achse X herunter zu klappen, **dadurch gekennzeichnet, dass** der Ring (2) mit dem Bund (3) sind:
- am Hals ohne Bewegung zwischen dem Ring (2) und dem Bund (3) zueinander montierbar;
- ohne Bewegung zwischen dem Ring (2) und dem Bund (3) zueinander vom Hals demontierbar,
und dadurch, dass die gelenkigen Laschen (4) ein inneres Befestigungsmittel (5) aufweisen, das imstande ist, in ein äußeres Befestigungsmittel des Halses einzugreifen, wobei das innere Befestigungsmittel (5) ein geformtes Gewinde ist.

2. Befestigungssystem (1) nach dem vorstehenden Anspruch, **dadurch gekennzeichnet, dass** der Ring (2) einen oberen Teil (10) umfasst, der die Schürze überragt, wobei jede gelenkige Lasche (4) über ein Scharnier (20) mit diesem oberen Teil (10) verbunden ist.

3. Befestigungssystem (1) nach dem vorstehenden Anspruch, **dadurch gekennzeichnet, dass** die Schürze Mittel zum radialen Blockieren der gelenkigen Laschen (4) umfasst, die das Herunterklappen der gelenkigen Laschen (4) ins Innere der Schürze begrenzen.

4. Befestigungssystem (1) nach dem vorstehenden Anspruch, **dadurch gekennzeichnet, dass** die Mittel zum radialen Blockieren der gelenkigen Laschen (4) aus feststehenden Laschen (6) bestehen, die starr mit dem oberen Teil (10) verbunden sind.

5. Befestigungssystem (1) nach dem vorstehenden Anspruch, **dadurch gekennzeichnet, dass** die Schürze mehrere Winkelsektoren umfasst, die sich aus einem Wechselspiel zwischen den gelenkigen Laschen (4) und den feststehenden Laschen (6) zusammensetzen.

6. Befestigungssystem (1) nach dem vorstehenden Anspruch, **dadurch gekennzeichnet, dass** die feststehenden Laschen (6) seitliche Ränder (8) aufweisen, mit denen die seitlichen Ränder (9) der gelenkigen Laschen (4) durch Reibung in Kontakt treten.

7. Befestigungssystem 1 nach dem vorstehenden Anspruch, **dadurch gekennzeichnet, dass** die gelenkigen Laschen (4) eine Erweiterung aufweisen, auf deren Höhe sich die seitlichen Ränder (9) der gelenkigen Laschen (4) an den seitlichen Rändern (8) der feststehenden Laschen (6) reiben.

8. Befestigungssystem (1) nach dem vorstehenden Anspruch, **dadurch gekennzeichnet, dass** sich die Erweiterung vorzugsweise im Bereich des freien Endes der gelenkigen Laschen (4) befindet.

9. Befestigungssystem (1) nach dem vorstehenden Anspruch, **dadurch gekennzeichnet, dass** die feststehenden Laschen (6) axiale Rippen (7) aufweisen, die sich entlang ihrer seitlichen Ränder (8) aufbauen.

10. Befestigungssystem (1) nach dem vorstehenden Anspruch, **dadurch gekennzeichnet, dass** die gelenkigen Laschen (4) zwischen den axialen Rippen (7) der feststehenden Laschen (6) gezwungenermaßen herunter geklappt werden.

11. Befestigungssystem (1) nach einem der vorstehenden Ansprüche, **dadurch gekennzeichnet, dass** der Ring (2) in einem Stück gebildet wird.

12. Verteiler eines flüssigen Produkts, umfassend einen Behälter für ein flüssiges Produkt, umfassend einen Hals, ein Verteilungsorgan (15), wie eine Pumpe, und ein Befestigungssystem (1) nach einem der vorstehenden Ansprüche, wobei das Befestigungssystem (1) am Hals befestigt ist.

13. Verfahren zur Herstellung eines Ringes (2) eines Befestigungssystems (1) zum Befestigen eines Verteilungsorgans (15), wie einer Pumpe, auf einem Hals eines Behälters zum Bilden eines Verteilers eines flüssigen Produkts, wobei der Ring (2) eine Mittelachse X aufweist, und eine Schürze umfasst, die dazu bestimmt ist, um den Hals herum eingesetzt zu werden, wobei diese Schürze gelenkige Befestigungslaschen (4) umfasst, die ein inneres Befestigungsmittel (5) aufweisen, das imstande ist, in ein äußeres Befestigungsmittel des Halses einzugreifen, wobei das Verfahren die folgenden Schritte umfasst:
- formen des Ringes (2) auf einem Kern, mit den gelenkigen Laschen (4) in geneigter Position in Bezug auf die Mittelachse und nach außerhalb der Schürze gerichtet;
- anheben der gelenkigen Laschen (4) bis zu deren Befreiung in Bezug auf den Kern;
- ausformen des Ringes (2) durch eine einzige geradlinige Translationsbewegung.

14. Verfahren zur Herstellung eines Ringes (2) eines Befestigungssystems (1) zum Befestigen eines Verteilungsorgans (15), wie einer Pumpe, auf einem Hals eines Behälters zum Bilden eines Verteilers eines flüssigen Produkts, wobei der Ring (2) eine Mittelachse X aufweist, und eine Schürze umfasst, die dazu bestimmt ist, um den Hals herum eingesetzt zu werden, wobei diese Schürze gelenkige Befestigungslaschen (4) umfasst, die ein inneres Befestigungsmittel (5) aufweisen, das imstande ist, in ein äußeres Befestigungsmittel des Halses einzugreifen, wobei das Verfahren die folgenden Schritte umfasst:
- formen des Ringes (2) auf einem Kern, mit den gelenkigen Laschen (4) in geneigter Position in Bezug auf die Mittelachse und nach außerhalb der Schürze gerichtet;
- ausformen des Ringes (2) mit seinen gelenkigen Laschen (4) durch eine einzige geradlinige Translationsbewegung.

## Claims

1. An attachment system (1) for attaching a dispensing member, such as a pump, to a neck of a tank to constitute a fluid product dispenser, the dispenser being dismountable by withdrawing the attachment system (1) from the neck, the system comprising an attachment ring (2) and a rigid hoop (3), the ring (2) comprising a skirt designed to be engaged around the neck, this skirt comprising hinged attachment tabs (4) inclined towards the outside with respect to a central axis X of the ring (2), the hoop (3) being movable with respect to the skirt and engaged around the skirt so as to fold back the hinged tabs (4) until they are aligned radially with the axis X, **characterised in that** the ring (2) with the hoop (3) are :
- mountable on the neck without relative movement between the ring (2) and the hoop (3);
- and dismountable from the neck without any relative movement between the ring (2) and the hoop (3),
and **in that** the hinged tabs (4) have an internal attachment means (5) capable of interfering with an external attachment means of the neck, said internal attachment means (5) being a moulded thread.

2. The attachment system (1) according to the preceding claim, **characterised in that** the ring (2) comprises an upper part (10) surmounting the skirt, each hinged tab (4) being connected to this upper part (10) via a hinge (20).

3. The attachment system (1) according to the preceding claim, **characterised in that** the skirt comprises means for radially locking the hinged tabs (4), limiting the folding of the hinged tabs (4) towards the inside of the skirt.

4. The attachment system (1) according to the preceding claim, **characterised in that** said means for radially locking the hinged tabs (4) consist of fixed tabs (6) rigidly connected to the upper part (10).

5. The attachment system (1) according to the preceding claim, **characterised in that** the skirt comprises several angular sectors composed of an alternation between said hinged tabs (4) and said fixed tabs (6).

6. The attachment system (1) according to the preceding claim, **characterised in that** the fixed tabs (6) have lateral edges (8) against which lateral edges (9) of the hinged tabs (4) come into frictional contact.

7. The attachment system (1) according to the preceding claim, **characterised in that** the hinged tabs (4) have a widening at the height of which the lateral edges (9) of the hinged tabs (4) rub against the lateral edges (8) of the fixed tabs (6).

8. The attachment system (1) according to the preceding claim, **characterised in that** the widening is preferably located at the free end of the hinged tabs (4).

9. The attachment system (1) according to the preceding claim, **characterised in that** the fixed tabs (6) have axial ribs (7) running along their lateral edges (8).

10. The attachment system (1) according to the preceding claim, **characterised in that** the hinged tabs (4) are folded down forcibly between the axial ribs (7) of the fixed tabs (6).

11. The attachment system (1) according to one of the preceding claims, **characterised in that** the ring (2) is formed in a single piece.

12. A fluid product dispenser comprising a fluid product tank comprising a neck, a dispensing member (15) such as a pump, and an attachment system (1) according to any one of the preceding claims, wherein the attachment system (1) is attached to the neck.

13. A method of manufacturing a ring (2) of an attachment system (1) for attaching a dispensing member (15), such as a pump, to a neck of a tank to constitute a fluid product dispenser, the ring (2) having a central axis X and comprising a skirt designed to be engaged around the neck, this skirt comprising hinged attachment tabs (4) having internal attachment means (5) suitable for interfering with external attaching means of the neck, said method comprising the following steps of:
- moulding of the ring (2) on a core with the hinged tabs (4) in an inclined position with respect to the central axis and directed towards the outside of the skirt;
- raising the hinged tabs (4) until they are disengaged with respect to the core;
- demoulding the ring (2) with a single straight translation movement.

14. A method of manufacturing a ring (2) of an attachment system (1) for attaching a dispensing member (15), such as a pump, to a neck of a tank to constitute a fluid product dispenser, the ring (2) having a central axis X and comprising a skirt designed to be engaged around the neck, this skirt comprising hinged attachment tabs (4) having internal attachment means (5) suitable for interfering with external attaching means of the neck, said method comprising the following steps of:
- moulding of the ring (2) on a core with the hinged tabs (4) in an inclined position with respect to the central axis and directed towards the outside of the skirt;
- demoulding the ring (2) with its hinged tabs (4) in a single straight translation movement.
